# FASCICULE DE BREVET EUROPEEN

(11) **EP 3 250 422 B1**
(45) Date de publication et mention de la délivrance du brevet: **30.06.2021**
(21) Numéro de dépôt: 15817225.4
(22) Date de dépôt: 17.12.2015
(51) Int. Cl.: B60S 1/48, F16K 7/12, F16K 13/10

(54) **VANNE DE DISTRIBUTION DE FLUIDE POUR UN SYSTÈME DE DISTRIBUTION DE LIQUIDE LAVE-GLACE DE VÉHICULE**
FLÜSSIGKEITSVERTEILUNGSVENTIL FÜR EIN FLÜSSIGKEITSVERTEILUNGSSYSTEM EINES FAHRZEUGWÄSCHERS
FLUID DISTRIBUTION VALVE FOR A VEHICLE WASHER FLUID DISTRIBUTION SYSTEM

(30) Priorité: 30.01.2015 FR 1550729
(43) Date de publication de la demande: 06.12.2017
(73) Titulaire: Valeo Systèmes d'Essuyage, 78322 Le Mesnil Saint Denis (FR)
(72) Inventeur: CAILLOT, Gérald, 78322 Le Mesnil Saint- Denis cédex (FR)
(74) Mandataire: Valeo Visibility
(86) Numéro de dépôt international: PCT/EP2015/080237
(87) Numéro de publication internationale: WO 2016/119974

(56) Documents cités:
- DE-A1- 2 638 879
- FR-A1- 2 777 340
- FR-A1- 2 967 954
- FR-A1- 2 994 148
- JP-A- H09 286 307
- JP-A- 2005 014 787

## Description

### DOMAINE TECHNIQUE

La présente invention concerne une vanne de distribution de fluide en particulier pour un système de distribution de liquide lave-glace de véhicule.

### ETAT DE L'ART

Le document FR 2 777 340 A1 décrit une vanne où la membrane est déformée par la déplacement d'un plongeur métallique, sur lequel le champ magnétique agit pour effectuer son déplacement, et par conséquent la déformation de la membrane.

On connaît des systèmes d'essuyage de pare brise de véhicules automobiles comprenant des balais d'essuyage du pare brise pourvus de dispositifs embarqués de lavage du pare brise, chacun des balais comportant une ou deux rampes de projection de liquide lave glace.

Dans le cas d'un balai comportant une seule rampe (mono-rampe), la rampe s'étend d'un côté du balai pour la projection de liquide lave glace sur le pare brise. La projection de liquide s'effectue généralement devant le balai en mouvement, pour être aussitôt essuyé et ne pas perturber la vision du conducteur. Par exemple la projection du liquide est mise en œuvre dans le sens montant et stoppée pour le mouvement du bras dans le sens descendant. On peut aussi pour certaines applications projeter l'eau après le balai, pour laisser au liquide le temps d'agir avec les pollutions qui doivent être éliminées.

L'alimentation en liquide lave glace de la rampe nécessite un conduit acheminant le liquide à la rampe depuis une pompe mono-voie prélevant du liquide lave-glace dans un réservoir de liquide lave-glace disposé sous le capot du véhicule.

Dans le cas d'un balai comportant deux rampes (bi-rampe), une rampe s'étend de chaque côté du balai. Ces rampes sont prévues pour projeter du liquide lave glace sur le pare-brise, alternativement dans le sens montant et le sens descendant de rotation du balai. L'alimentation en liquide lave glace de ces rampes nécessite deux conduits distincts acheminant le liquide aux rampes depuis une pompe bi-voie prélevant du liquide dans le réservoir. Cependant, l'implantation de ces deux conduits jusqu'aux rampes de projection est relativement complexe, en particulier au niveau des bras d'entraînement des balais le long desquels l'espace intérieur disponible est faible.

D'autre part les deux tuyaux visibles sur le bras sont souvent perçus comme peu esthétique, il existe également un besoin pour améliorer l'aspect visuel de l'alimentation en liquide

Le double conduit présente également un impact négatif sur les performances aérodynamiques.

Pour pallier à ces inconvénients, il a déjà été proposé des systèmes d'essuyage dans lesquels les deux rampes de projection sont reliées à un conduit unique permettant d'alimenter lesdites rampes à partir d'une pompe mono-voie. La distribution du liquide lave-glace s'effectue dans l'une et/ou l'autre desdites rampes de projection à l'aide d'au moins une vanne dirigeant le liquide lave-glace dans la et/ou les rampes de projection choisies.

L'invention vise notamment à perfectionner cette technologie au moyen d'un nouveau type de vanne qui permet par exemple de distribuer du liquide lave-glace depuis une pompe mono-voie jusqu'à une ou deux (voire plus) rampes de projection.

Ce nouveau type de vanne n'est toutefois pas limité à cette application particulière et peut être utilisé dans n'importe quelle application nécessitant une distribution de fluide.

### EXPOSE DE L'INVENTION

L'invention propose à cet effet une vanne de distribution de fluide, en particulier pour un système de distribution de liquide lave-glace de véhicule, comprenant un corps définissant un canal de passage de fluide et comportant au moins une entrée de fluide et au moins une sortie de fluide, une membrane logée dans le canal et des moyens de génération d'un champ magnétique à l'intérieur du canal pour commander la déformation de la membrane, la vanne étant caractérisée en ce que la membrane est configurée pour être directement déformée par un champ magnétique entre une première position de fermeture au moins partielle du canal et une seconde position d'ouverture du canal. Cette technologie permet avantageusement de se libérer des contraintes mécaniques.

Dans la présente demande, on entend par fermeture (et ouverture, respectivement) au moins partielle du canal, la fermeture (et l'ouverture, respectivement) d'au moins une entrée ou une sortie, du canal.La membrane peut être configurée pour obturer au moins une partie du canal, en particulier au moins une sortie du canal, dans sa première position, correspondant à l'absence d'application de champ magnétique. Dans cette première position, la membrane peut avoir un profil de forme non plane.

Lors de l'application du champ magnétique, la membrane est déformée et adopte une position selon les lignes de champ, appelée seconde position. Dans cette seconde position, la membrane peut être au moins en partie plaquée contre une paroi interne du canal. Elle peut avoir un profil de forme sensiblement plane dans cette seconde position.La membrane est de préférence réalisée dans un matériau souple et est par exemple réalisée en matériau polymère, notamment en silicone.

Selon un mode de réalisation de l'invention, cette membrane comprend des particules magnétiques.Sous l'effet du champ magnétique généré par lesdits moyens, les particules magnétiques sont aptes à déformer la membrane. L'application du champ magnétique peut ainsi entraîner la déformation de la membrane et l'ouverture ou la fermeture du canal. Plus précisément, les particules portées par la membrane vont s'aligner selon les lignes de champ, à l'application du champ magnétique, et vont entraîner la déformation de la membrane et son déplacement d'une position à une autre.

La membrane peut être fixée à une paroi interne du canal.

De préférence, les moyens de génération du champ magnétique comprennent un enroulement d'au moins un fil électrique qui entoure la partie du canal logeant la membrane. Cet enroulement forme une bobine-, ou solénoïde-, qui est destinée à être reliée à une source de courant. La vanne selon l'invention peut ainsi être considérée comme une électrovanne. C'est le passage du courant dans l'enroulement qui induit un champ magnétique.

Cet enroulement peut être configuré pour générer de la chaleur en vue du chauffage du fluide. Ceci est avantageux dans le cas où il existe un risque de gel du fluide.

La vanne peut être intégrée à un conduit de fluide. En variante la vanne est raccordée à un tel conduit. Par exemple, l'entrée de fluide comporte un embout de raccord avec le conduit d'alimentation venant de la pompe et/ou la sortie de fluide comporte un embout de raccord avec une rampe d'arrosage. Dans le cadre de l'invention, on entend par rampe d'arrosage tout dispositif de projection de liquide lave-glace pour véhicule connu de l'homme du métier, la rampe d'arrosage comporte par exemple plusieurs buses de projection. Dans une variante la rampe est un simple gicleur.

Selon un autre aspect, la présente invention a pour objet un connecteur hydraulique pour un système de distribution de liquide lave-glace de véhicule, comprenant au moins une vanne selon l'invention.

Selon encore un aspect, la présente invention a pour objet un système de distribution de liquide lave-glace de véhicule comprenant au moins une vanne telle que décrite ci-dessus.

La présente invention concerne également un système d'essuyage de pare brise de véhicule comprenant au moins une vanne telle que décrite ci-dessus.

Ce système peut comprendre une pompe, par exemple mono-voie, au moins un balai d'essuyage et au moins une rampe d'arrosage reliée à la pompe par ladite vanne. Cette dernière est par exemple située sur le balai.

Dans le cas d'un balai mono-rampe, la vanne comprend une entrée reliée à la pompe et une sortie reliée à la rampe, on parle de vanne à deux voies. Dans le cas d'un balai bi-rampe, la vanne est alors du type à trois voies et comprend une entrée reliée à la pompe et deux sorties reliées respectivement aux rampes.

La vanne peut être intégrée à des moyens de connexion du balai à un bras d'entraînement dudit balai. En variante, la vanne est intégrée à un embout d'extrémité du balai.

Dans un mode de réalisation le système d'essuyage comprend également un bras d'entraînement du balai d'essuyage, sur lequel est par exemple située la rampe d'arrosage.

Dans une autre variante elle peut être montée sous le capot du véhicule équipé du système d'essuyage.

Dans une variante encore, la vanne sert à alimenter des gicleurs ou des rampes se trouvant intégrés à un bras d'essuyage et fonctionne sur le même principe pour le pilotage de l'arrosage.

### DESCRIPTION DES FIGURES

L'invention sera mieux comprise et d'autres détails, caractéristiques et avantages de l'invention apparaîtront à la lecture de la description suivante faite à titre d'exemple non limitatif et en référence aux dessins annexés dans lesquels :
- la figure 1 est une vue schématique d'un système d'essuyage de pare brise de véhicule,
- la figure 2 est une vue en perspective d'un balai d'essuyage d'un système d'essuyage de pare brise de véhicule,
- les figures 3 et 4 illustrent schématiquement en coupe axiale deux positions différentes d'une vanne selon l'invention, pour un balai d'essuyage bi-rampe, et
- les figures 5 et 6 sont des vues schématiques en coupe axiale similaires aux figures 3 et 4 d'une variante de réalisation de vanne selon l'invention, pour un balai d'essuyage mono-rampe.

### DESCRIPTION DETAILLEE

Dans la suite de la description les dénominations longitudinales ou latérales se réfèrent à l'orientation du bras d'entraînement sur lequel est monté le balai d'essuyage. La direction longitudinale correspond à l'axe principal du bras dans lequel il s'étend alors que les orientations latérales correspondent à des droites concourantes, c'est-à-dire qui croisent la direction longitudinale, notamment perpendiculaires à l'axe longitudinal du bras dans son plan de rotation. Pour les directions longitudinales, les dénominations avant et arrière s'apprécient par rapport au point de fixation du balai sur le bras, la dénomination avant désignant la direction allant vers l'extrémité distale du bras et la dénomination arrière la direction opposée. En outre, les directions référencées comme supérieures ou inférieures correspondent à des orientations perpendiculaires au plan de rotation du bras, la dénomination inférieure contenant le plan du pare-brise.

Enfin, des références numériques identiques sont utilisées pour désigner des éléments identiques ou analogues.

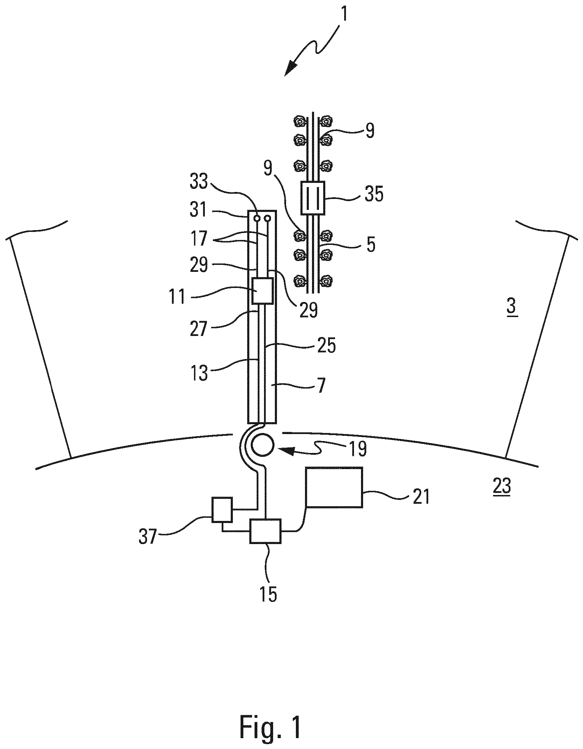

On se réfère d'abord à la figure 1 qui représente un système d'essuyage 1 de pare brise 3 d'un véhicule automobile, ce système comportant ici un balai 5 d'essuyage bi-rampe du pare brise 3 qui est illustré de façon détachée d'un bras d'entraînement 7. Le balai 5 comporte deux rampes d'arrosage 9 de projection de liquide lave glace montés sur le balai.

Le système d'essuyage 1 comprend en outre des moyens d'alimentation en liquide lave glace, qui comprennent une vanne 11 selon l'invention de distribution sélective de liquide lave glace à chacune des rampes 9, une pompe 15 d'alimentation en liquide lave glace, et un conduit d'alimentation 13 d'acheminement du liquide lave glace depuis la pompe 15 à la vanne 11. La vanne 11 est raccordée par deux conduits 17 aux rampes 9.

Dans l'exemple représenté, le système d'essuyage 1 comporte un seul balai d'essuyage 5 disposé sensiblement en position centrale du pare brise 3. En variante, le système d'essuyage 1 pourrait en comporter deux, un disposé face au conducteur et un disposé face au passager.

Les rampes 9 s'étendent sensiblement sur la longueur du balai, de chaque côté et dans l'axe longitudinal de ce dernier. Ces rampes 9 sont ainsi agencées pour projeter du liquide lave glace le long du balai.

Le balai 5 est monté sur le bras d'entraînement 7 pour être entraîné par ce dernier en essuyage du pare brise 3, dans un mouvement de rotation cyclique, sensiblement en portion de cercle sur le pare brise, autour d'un axe de rotation 19.

La pompe 15 d'alimentation en liquide lave glace des rampes 9 est elle-même reliée est reliée à la vanne 11 au moyen du conduit d'alimentation 13, qui est ici un conduit souple et à un récipient 21 de liquide lave glace, dans lequel le liquide est prélevé pour être acheminé aux rampes 9.

Le conduit d'alimentation 13 et un câble 25 d'alimentation électrique de la vanne 11, de préférence lié au conduit 13, sont par exemple au moins en partie logés dans le bras 7 ainsi que dans une partie sous le capot 23 du véhicule.

La vanne 11 selon l'invention peut être montée à l'extrémité distale 31 du bras 7, par exemple au niveau d'une tête de bras.

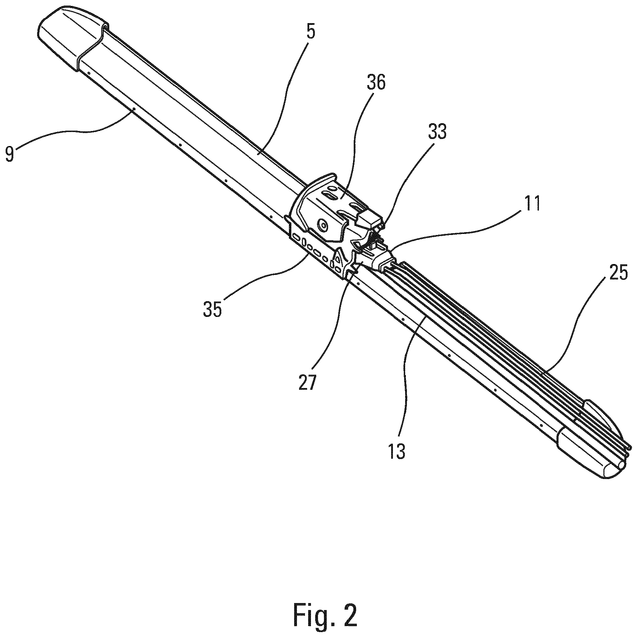

La vanne 11 est de préférence, au moins en partie, intégrée à un connecteur hydraulique 33 configuré pour établir une liaison hydraulique de la vanne 11 vers les rampes 9, tel qu'on le voit à la figure 2, en sorte qu'au moins ses deux sorties soient configurées pour faire partie du connecteur hydraulique destiné à être relié au balai.

Le connecteur hydraulique 33 est disposé sur le bras 7, non représenté à la figure 2. Le balai 5 comporte ici en outre un connecteur mécanique 35 et un adaptateur 36 articulé sur le connecteur mécanique et configuré pour se verrouiller au bras 7.

La vanne 11 et la pompe 15 sont reliées à une unité de commande 37, qui est par exemple le *« body contrôler* » du véhicule, formant des moyens de contrôle combiné de la vanne et la pompe.

Cette unité de commande 37 peut gérer le fonctionnement de la vanne 11 et de la pompe 15, selon plusieurs modes de fonctionnement distincts. Un de ces modes peut prévoir dans un cycle de nettoyage une activation en continu de la pompe 15 et un pilotage sélectif de la vanne 11 en fonction des diverses positions du balai 5 sur le pare brise 3 dans un cycle d'essuyage associé.

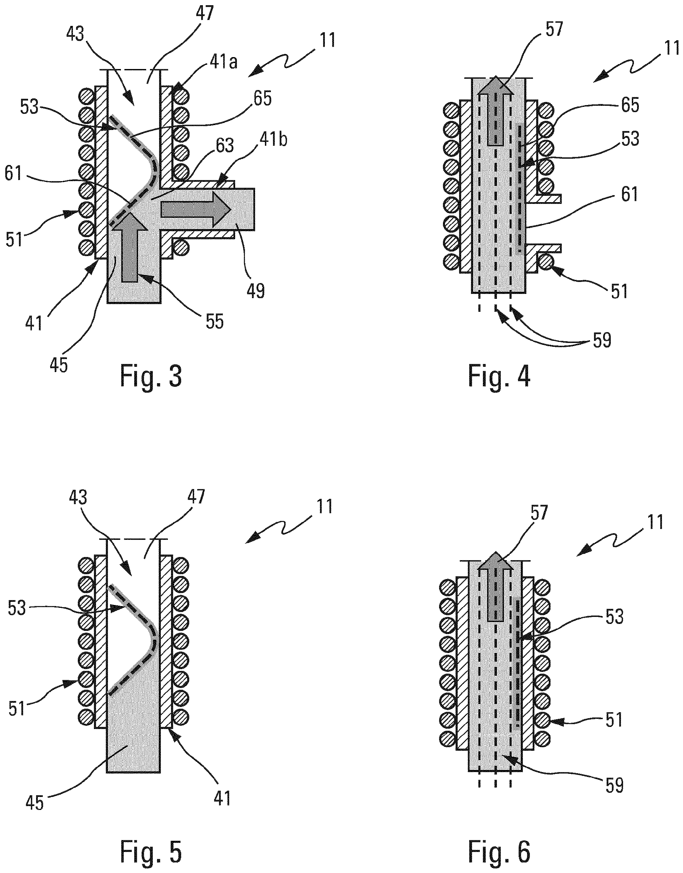

On se réfère désormais aux figures 3 et 4 qui représentent schématiquement un premier mode de réalisation de la vanne 11 selon l'invention.

La vanne 11 comprend un corps 41 définissant un canal 43 de passage de liquide lave glace et comportant ici une entrée 45 et deux sorties 47, 49. La première sortie 47 est par exemple alignée avec l'entrée et la deuxième sortie 49 est latérale et est ici sensiblement perpendiculaire à l'entrée 45, le canal 43 ayant ainsi une forme sensiblement en T. Comme expliqué dans ce qui précède, l'entrée 45 de la vanne est reliée par le conduit 13 à la pompe 15, et les sorties 47, 49 de la vanne sont reliées respectivement aux conduits 17.

Le corps 41 comprend une partie principale 41a définissant l'entrée 45 et la première sortie 47, et une dérivation 41b qui définit la deuxième sortie 49. La partie principale 41a du corps est entourée par un enroulement 51 de fil(s) électrique(s) qui forme une bobine ou un solénoïde et qui est relié à une source de courant, non représentée, par l'intermédiaire du câble 25 d'alimentation de l'unité de commande 37. Cet enroulement 51 peut former une ou plusieurs couches de fil électrique sur la partie 41a du corps. En variante, l'enroulement 51 peut être intégré au corps 41 de la vanne pour s'étendre autour du canal 43 sur une partie de sa longueur. La vanne 11 comprend en outre une membrane 53 mobile entre une première position de fermeture au moins partielle du canal 43 (figure 3) et une seconde position d'ouverture au moins partielle du canal (figure 4).

La forme en T du canal d'une vanne à trois voies n'est pas limitative. L'entrée et les deux sorties peuvent ainsi former un Y ou toute autre forme adaptée à la forme de la membrane mobile et à l'intégration de la vanne dans le système.

Dans l'exemple représenté, lorsque la membrane 53 est dans sa première position (figure 3), elle obture la première sortie 47 du canal et laisse libre sa deuxième sortie 49. Lorsque la pompe 15 est activée, le liquide lave glace circule alors de l'entrée 45 vers la deuxième sortie 49 de la vanne pour l'alimentation en liquide lave glace de l'une des rampes 9 du balai 5 (flèche 55).

Lorsque la membrane 53 est dans sa deuxième position, elle obture la deuxième sortie 49 du canal et laisse libre sa première sortie 47. Lorsque la pompe 15 est activée, le liquide lave glace circule alors de l'entrée 45 vers la première sortie 47 de la vanne pour l'alimentation en liquide lave glace de l'autre rampe 9 du balai 5 selon laflèche 57.

La déformation de la membrane 53, entre les première et seconde positions, est réalisée par application d'un champ magnétique dans le canal 43, et en particulier dans la partie du canal dans laquelle est logée la membrane.

La membrane 53 est ici logée dans la partie principale 41a du canal. En l'absence d'application d'un champ magnétique, la membrane 53 est ici dans la première position représentée en figure 3. Dès l'application d'un champ magnétique induit par l'alimentation électrique de l'enroulement 51, la membrane 53 se déforme et adopte la seconde position représentée en figure 4.

Pour cela, la membrane 53 est réalisée dans un matériau souple ou flexible (tel qu'en matériau polymère) et comprend des particules magnétiques qui sont destinées, sous l'effet du champ magnétique, à déformer la membrane et à la déplacer de sa première à sa seconde position. Lors de l'application du champ magnétique, les particules portées par la membrane s'alignent parallèlement aux lignes de champ 59, ce qui déforme la membrane 53.

Dans l'exemple représenté, la membrane 53 est fixée sensiblement en son milieu à la paroi interne de la partie principale 41a du corps. Elle comprend une partie amont 61 (par rapport au sens d'écoulement du liquide dans le canal 43) déformable entre une position dans laquelle elle est appliquée sur le bord périphérique du débouché 63 de la deuxième sortie 49 dans le canal, et obture ainsi cette sortie 49 (figure 4), et une position dans laquelle elle contacte par son extrémité libre une surface interne du canal 43 située en regard du débouché 63, et obture ainsi la première sortie 47 (figure 3).

La membrane 53 comprend également une partie aval 65 déformable entre une position dans laquelle elle est appliquée sur une surface interne du canal 43 située du côté du débouché 63, et laisse ainsi libre la première sortie 47 (figure 4), et une position dans laquelle elle contacte par son extrémité libre sur une surface interne du canal située du côté opposé au débouché 63, et obture ainsi la première sortie 47 (figure 3).

Dans sa position représentée en figure 3, la membrane 53 a une forme en U ou en V, dont la partie médiane est fixée à la paroi interne du canal 43 et les branches forment les parties amont 61 et aval 65 précitées, respectivement. Dans la position représentée en figure 4, la membrane 53 a une forme sensiblement plane.

La forme générale de la membrane 53 dépend notamment de la forme en section du canal 43. Dans le cas où le canal 43 a en section une forme carrée, la membrane 53 peut avoir une forme générale rectangulaire. La membrane 53 peut alors être destinée à être plaquée contre une face plane interne du canal 43 dans le cas de la figure 4, et chacune de ses parties amont 61 et aval 65 peut être configurée pour que ses bords périphériques coopèrent de façon étanche avec les autres faces internes du canal dans le cas de la figure 3.

Dans le cas où le canal 43 a en section une forme circulaire, chaque partie amont 61 et aval 65 de la membrane 53 peut avoir une forme générale circulaire ou oblongue.

Le système d'essuyage 1 et la vanne 11 des figures 3 et 4 peuvent fonctionner de la façon suivante. Lorsque le balai 5 doit être alimenté en liquide lave glace, l'unité de commande 37 active la pompe 15 qui alimente la vanne en liquide lave glace provenant du récipient 21. L'enroulement 51 de la vanne 11 peut ne pas encore être alimenté de sorte que la membrane 53 reste dans la première position de la figure 3, le liquide lave glace alimente alors la rampe du balai reliée à la deuxième sortie 49, par exemple lors d'une rotation du balai dans le sens montant. L'unité de commande 37 active ensuite la vanne 11, c'est à dire qu'elle active l'alimentation électrique de l'enroulement 51. La membrane 53 se déplace alors jusque dans la seconde position représentée en figure 4, de façon à ce que le liquide lave glace circule jusqu'à la rampe du balai reliée à la première sortie 47 par exemple lors d'une rotation du balai dans le sens descendant.

Les figures 5 et 6 représentent une variante de réalisation de la vanne selon l'invention, cette vanne 11 comportant une entrée 45 et une seule sortie 47 et étant donc du type à deux voies, qui peut être utilisée pour l'alimentation en liquide de lavage d'un balai mono-rampe. Les références utilisées en référence aux figures 3 et 4 sont reprises pour désigner les mêmes éléments des figures 5 et 6.

La différence structurelle essentielle entre les modes de réalisation des figures 3 et 4, d'une part, et 5 et 6, d'autre part, est que le corps 41 de la vanne ne comprend pas de dérivation. Dans sa première position représentée en figure 5, la membrane 53 obture totalement le canal 43 et, dans sa seconde position représentée en figure 6, elle laisse libre le canal 43.

L'unité de commande 37 peut commander simultanément l'activation de la pompe 15 et de la vanne 11 des figures 5 et 6, du liquide lave glace circulant alors depuis le récipient 21 jusqu'à la rampe unique du balai en passant par le canal 43 de la vanne 11.L'invention n'est pas limitée aux exemples qui viennent d'être décrits.

## Revendications

1. Vanne (11) de distribution de fluide pour un système (1) de distribution de liquide lave-glace de véhicule, comprenant un corps (41) définissant un canal (43) de passage de fluide et comportant au moins une entrée (45) de fluide et au moins une sortie (47, 49) de fluide, une membrane (53) logée dans le canal et des moyens (51) de génération d'un champ magnétique à l'intérieur du canal pour commander la déformation de la membrane, la vanne étant **caractérisée en ce que** la membrane est configurée pour être directement déformée par un champ magnétique entre une première position de fermeture au moins partielle du canal et une seconde position d'ouverture du canal.

2. Vanne (11) selon la revendication 1, **caractérisée en ce que** la membrane (53) est réalisée dans un matériau souple.

3. Vanne (11) selon la revendication 1 ou 2, pour laquelle la membrane (53) comprend des particules magnétiques.

4. Vanne (11) selon l'une quelconque des revendications précédentes, **caractérisée en ce que** la membrane (53) est fixée à une paroi (40) interne du canal (43).

5. Vanne (11) selon l'une quelconque des revendications précédentes, **caractérisée en ce que** lesdits moyens comprennent un enroulement (51) d'au moins un fil électrique qui entoure la partie du canal (43) logeant la membrane (53).

6. Vanne (11) selon la revendication précédente, **caractérisée en ce que** l'enroulement (51) est configuré pour générer de la chaleur en vue du chauffage du fluide.

7. Connecteur hydraulique (33) pour un système (1) de distribution de liquide lave-glace de véhicule, comprenant au moins une vanne (11) selon l'une quelconque des revendications précédentes.

8. Système (1) de distribution de liquide lave-glace de véhicule **caractérisé en ce qu'**il comprend au moins une vanne (11) selon l'une quelconque des revendications 1 à 6.

9. Système (10) d'essuyage de pare brise de véhicule, **caractérisé en ce qu'**il comprend au moins un balai d'essuyage (5) et au moins une vanne (11) selon l'une quelconque des revendications 1 à 6.

10. Système d'essuyage selon la revendication précédente, **caractérisé en ce qu'**il comprend une pompe (15) et au moins une rampe d'arrosage (9) reliée à la pompe par la vanne (11).

11. Système d'essuyage selon l'une des revendications 9 ou 10, **caractérisé en ce qu'**il comprend également un bras (7) d'entraînement dudit balai (5).

12. Système d'essuyage selon la revendication précédente, **caractérisé en ce que** la vanne (11) est intégrée à des moyens (33, 35, 36) de connexion du balai (5) au bras (7) d'entraînement dudit balai.

13. Système d'essuyage selon l'une quelconque des revendications 10 à 12, **caractérisé en ce que** la au moins une rampe (9) est située sur le balai (5).

14. Système d'essuyage selon l'une des revendications 11 et 12, **caractérisé en ce que** la au moins une rampe (9) est située sur le bras (7).

15. Système de nettoyage d'un dispositif d'aide à la conduite d'un véhicule automobile, en particulier d'un moyen de prise de vue ou de détection par ondes électromagnétiques, ledit système comprenant au moins une vanne (11) de distribution de fluide selon l'une quelconque des revendications 1 à 6.

## Patentansprüche

1. Fluidverteilungsventil (11) für ein Verteilungssystem (1) für Scheibenwaschflüssigkeit eines Fahrzeugs, welches einen Körper (41), der einen Fluiddurchflusskanal (43) definiert und wenigstens einen Fluideinlass (45) und wenigstens einen Fluidauslass (47, 49) aufweist, eine in dem Kanal aufgenommene Membran (53) und Mittel (51) zur Erzeugung eines Magnetfeldes im Inneren des Kanals, um die Verformung der Membran zu steuern, umfasst, wobei das Ventil **dadurch gekennzeichnet ist, dass** die Membran dafür ausgelegt ist, von einem Magnetfeld zwischen einer ersten Position der wenigstens teilweisen Schließung des Kanals und einer zweiten Position der Öffnung des Kanals verformt zu werden.

2. Ventil (11) nach Anspruch 1, **dadurch gekennzeichnet, dass** die Membran (53) aus einem flexiblen Material hergestellt ist.

3. Ventil (11) nach Anspruch 1 oder 2, wobei die Membran (53) magnetische Partikel umfasst.

4. Ventil (11) nach einem der vorhergehenden Ansprüche, **dadurch gekennzeichnet, dass** die Membran (53) an einer inneren Wand (40) des Kanals (43) befestigt ist.

5. Ventil (11) nach einem der vorhergehenden Ansprüche, **dadurch gekennzeichnet, dass** die Mittel eine Wicklung (51) wenigstens eines Leitungsdrahtes umfassen, welche den Teil des Kanals (43) umgibt, der die Membran (53) aufnimmt.

6. Ventil (11) nach dem vorhergehenden Anspruch, **dadurch gekennzeichnet, dass** die Wicklung (51) dafür ausgelegt ist, Wärme zur Erwärmung des Fluids zu erzeugen.

7. Hydraulikverbinder (33) für ein Verteilungssystem (1) für Scheibenwaschflüssigkeit eines Fahrzeugs, welches wenigstens ein Ventil (11) nach einem der vorhergehenden Ansprüche umfasst.

8. Verteilungssystem (1) für Scheibenwaschflüssigkeit eines Fahrzeugs, **dadurch gekennzeichnet, dass** es wenigstens ein Ventil (11) nach einem der Ansprüche 1 bis 6 umfasst.

9. Wischsystem (10) für die Windschutzscheibe eines Fahrzeugs, **dadurch gekennzeichnet, dass** es wenigstens ein Wischerblatt (5) und wenigstens ein Ventil (11) nach einem der Ansprüche 1 bis 6 umfasst.

10. Wischsystem nach dem vorhergehenden Anspruch, **dadurch gekennzeichnet, dass** es eine Pumpe (15) und wenigstens eine Sprühleiste (9), die mit der Pumpe über das Ventil (11) verbunden ist, umfasst.

11. Wischsystem nach einem der Ansprüche 9 oder 10, **dadurch gekennzeichnet, dass** es außerdem einen Arm (7) zum Antrieb des Wischerblattes (5) umfasst.

12. Wischsystem nach dem vorhergehenden Anspruch, **dadurch gekennzeichnet, dass** das Ventil (11) mit Mitteln (33, 35, 36) zur Verbindung des Wischerblattes (5) mit dem Arm (7) zum Antrieb des Wischerblattes integriert ist.

13. Wischsystem nach einem der Ansprüche 10 bis 12, **dadurch gekennzeichnet, dass** sich die wenigstens eine Leiste (9) am Wischerblatt (5) befindet.

14. Wischsystem nach einem der Ansprüche 11 und 12, **dadurch gekennzeichnet, dass** sich die wenigstens eine Leiste (9) am Arm (7) befindet.

15. System zur Reinigung einer Fahrassistenzvorrichtung eines Kraftfahrzeugs, insbesondere eines Bildaufnahmemittels oder Mittels zur Erfassung mittels elektromagnetischer Wellen, wobei das System wenigstens ein Fluidverteilungsventil (11) nach einem der Ansprüche 1 bis 6 umfasst.

## Claims

1. A fluid distribution valve (11), in particular for a vehicle windshield washer liquid distribution system (1), comprising a body (41) defining a duct (43) for the passage of fluid and including at least one fluid inlet (45) and at least one fluid outlet (47, 49), a membrane (53) housed in the duct, and means (51) for generating a magnetic field inside the duct in order to control the deformation of the membrane, the valve being **characterized in that** the membrane is configured to be directly deformed by a magnetic field between a first position of at least partial closure of the duct and a second position of at least partial opening of the duct.

2. The valve (11) as claimed in claim 1, **characterized in that** the membrane (53) is made of a flexible material.

3. The valve (11) as claimed in claim 1 or 2, in which the membrane (53) contains magnetic particles.

4. The valve (11) as claimed in any one of the preceding claims, **characterized in that** the membrane (53) is fixed to an internal wall (40) of the duct (43).

5. The valve (11) as claimed in any one of the preceding claims, **characterized in that** said means (51) consist of a winding of at least one electrical wire around the part of the duct (43) housing the membrane (53).

6. The valve (11) as claimed in the preceding claim, **characterized in that** the winding (51) is configured to generate heat for heating the fluid.

7. A hydraulic connector (33) for a vehicle windshield washer liquid distribution system (1), comprising at least one valve (11) as claimed in any one of the preceding claims.

8. A vehicle windshield washer liquid distribution system (1) **characterized in that** it comprises at least one valve (11) as claimed in any one of claims 1 to 6.

9. A vehicle windshield wiper system (10) **characterized in that** it comprises a least one wiper (5) and at least one valve (11) as claimed in any one of claims 1 to 6.

10. The wiper system as claimed in the preceding claim, **characterized in that** it comprises a pump (15) and at least one sprayer manifold (9) connected to the pump by the valve (11).

11. The wiper system as claimed in either one of claims 9 or 10, **characterized in that** it also comprises an arm (7) for driving said wiper (5).

12. The wiper system as claimed in the preceding claim, **characterized in that** the valve (11) is integrated into means (33, 35, 36) for connecting the wiper (5) to the arm (7) for driving said wiper.

13. The wiper system as claimed in any one of claims 10 to 12, **characterized in that** the at least one manifold (9) is situated on the wiper (5).

14. The wiper system as claimed in either one of claims 11 and 12, **characterized in that** the at least one manifold (9) is situated on the arm (7).

15. A system for cleaning a motor vehicle driving assistance device, in particular imaging means or electromagnetic detection means, said system comprising at least one fluid distribution valve (11) as claimed in any one of claims 1 to 6.
